# EUROPÄISCHE PATENTSCHRIFT

(11) **EP 3 691 924 B1**
(45) Veröffentlichungstag und Bekanntmachung des Hinweises auf die Patenterteilung: **02.08.2023**
(21) Anmeldenummer: 18785871.7
(22) Anmeldetag: 28.09.2018
(51) Int. Cl.: B60K 35/00, B60K 37/00, B62K 11/00, B60R 11/02, G01D 7/00, B62J 99/00, B60R 11/00

(54) **ANZEIGEVORRICHTUNG UND ELEKTRISCH ANGETRIEBENER ROLLER MIT ENTSPRECHENDER ANZEIGEVORRICHTUNG**
DISPLAY DEVICE AND ELECTRICALLY DRIVEN SCOOTER HAVING A CORRESPONDING DISPLAY DEVICE
DISPOSITIF D'AFFICHAGE ET ROULEAU À ENTRAÎNEMENT ÉLECTRIQUE AYANT UN DISPOSITIF D'AFFICHAGE CORRESPONDANT

(30) Priorität: 02.10.2017 DE 102017122850
(43) Veröffentlichungstag der Anmeldung: 12.08.2020
(73) Patentinhaber: UJET S.A., 3364 Leudelange (LU)
(72) Erfinder: DAVID, Patrick, 89134 Blaustein (DE)
(74) Vertreter: Meissner Bolte Partnerschaft mbB
(86) Internationale Anmeldenummer: PCT/EP2018/076464
(87) Internationale Veröffentlichungsnummer: WO 2019/068580

(56) Entgegenhaltungen:
- EP-A1- 0 031 716
- EP-A1- 0 031 716
- EP-A2- 2 727 758
- EP-A2- 2 727 758
- DE-A1- 4 011 840
- DE-A1- 4 011 840
- DE-A1-102010 000 309
- US-A- 4 646 059
- US-A- 4 646 059

## Beschreibung

Die Erfindung betrifft eine Anzeigevorrichtung sowie einen elektrisch angetriebenen Roller mit einer entsprechenden Anzeigevorrichtung.

Mit elektrischen Antrieben ausgestattete Motorroller sind beispielsweise aus der EP 1 857 314 A2 bekannt. Entsprechende elektrische Motorroller oder motorisierte Zweiräder haben üblicherweise eine Karosserie und zwei Räder, wobei eines der Räder über einen elektrischen Antrieb angetrieben wird. Ferner haben solche Motorroller üblicherweise eine Lenkerbaugruppe, umfassend einen Lenker sowie eine Anzeigevorrichtung zur Darstellung von Geschwindigkeitsinformationen oder dem Ladezustand einer Batterie. Zusätzlich ist an der Lenkerbaugruppe oftmals ein Zündschloss vorgesehen, welches als Diebstahlsicherung des Motorrollers dient.

Die Anzeigevorrichtungen sind manchmal mit einem Flachbildschirm ausgestattet, welches durch eine Abdeckschicht, beispielsweise eine Glas- oder Kunststoffschicht geschützt wird. Folglich können an dem Flachbildschirm Reflektionen auftreten, die die Lesbarkeit des Flachbildschirms erschweren.

Die Lesbarkeit des Displays bzw. Flachbildschirms wird besonders stark von äußeren Umweltfaktoren, wie Hagel, Schnee oder Regen, beeinflusst. Weiterhin ist es möglich, dass entsprechende Flachbildschirme ausfallen. Ein Schaden an einem Flachbildschirm, z.B. eine zerbrochene Glasscheibe, kann dazu führen, dass das gesamte Fahrzeug nicht mehr funktionsfähig ist, da z.B. Geschwindigkeitsinformationen nicht mehr abgelesen werden können.

Allgemein ist die sichere und gut lesbare Darstellung von gewissen Informationen, z.B. Geschwindigkeit, für den Fahrer hoch relevant.

US 4 646 059 A beschreibt eine Informationsanzeigevorrichtung für ein Fahrzeug, um den Status von Motor- und Fahrzeugbetriebsparametern, die während der Benutzung des Fahrzeugs nicht immer angezeigt werden müssen, auf Wunsch des Fahrzeugführers und automatisch beim Auftreten eines Zustands, der außerhalb der Grenzwerte liegt, über entsprechende Festkörper-Anzeigevorrichtungen anzuzeigen. Beispielsweise können eine Änderung der Fahrgeschwindigkeit des Fahrzeugs, eine Änderung der verbleibenden Kraftstoffmenge oder der Kühlmitteltemperatur und eine Änderung der Motordrehzahl angezeigt werden.

DE 40 11 840 A1 beschreibt eine Anzeigeeinheit für mehrere physikalische Größen, insbesondere für Fahrbetriebsgrößen eines Kraftfahrzeugs, gekennzeichnet durch eine für eine erste physikalische Größe vorgesehene Anzeige, deren Farbe durch eine zweite physikalische Größe bestimmt ist.

EP 0 031 716 A1 lehrt eine Anzeigevorrichtung, die Folgendes umfasst:
eine sichtbare Anzeigefläche; ein Array an Flüssigkristallanzeigesegmenten, das auf der Fläche in Form einer Skala angeordnet wird; eine numerische Anzeige, die eine Vielzahl von Ziffernanzeigen in einer Reihe umfasst, wobei jede Ziffernanzeige eine Mehrsegment-Flüssigkristallanzeige umfasst, die auf der Fläche angeordnet wird und selektiv betrieben werden kann, um Zahlen anzuzeigen; und eine elektronische Schaltung zum Aktivieren des Arrays und der numerischen Anzeige, die Folgendes umfasst: einen Analog-Digital-Wandler zum Empfang eines analogen Eingangssignals zur Umwandlung in eine digitale Form;
eine erste Decoder-/Treibereinrichtung, die so angeschlossen ist, dass sie das Array als Reaktion auf das Signal in digitaler Form selektiv aktiviert, um ein Segment der Skala in Übereinstimmung mit dem Wert des Eingangssignals zu aktivieren; eine zweite Decoder-/Treibereinrichtung, die so angeschlossen ist, dass sie die numerische Anzeige in Übereinstimmung mit dem Wert des Eingangssignals selektiv aktiviert; der Betrieb der genannten ersten und zweiten Decoder-/Treibermittel steht in Bezug auf die angezeigten Werte in der Weise in Beziehung, dass eine Erhöhung eines Segments der Array-Skala einer Einheitsänderung der Zahl in der zweitniederwertigsten Stelle der numerischen Anzeige entspricht, wobei die niederwertige Stelle eine Interpolation von Werten liefert, die zwischen benachbarten Skalensegmenten liegen.

EP 2 727 758 A2 lehrt eine Zähleranzeigevorrichtung für ein Fahrzeug, Folgendes umfassend: einen Drehzahlanzeigebereich, der eine Drehzahl der Abtriebswelle einer Antriebsquelle anzeigt. Der Drehzahlanzeigebereich ist in mehrere Teilanzeigebereiche unterteilt, in denen unterschiedliche Drehzahlbereiche angezeigt werden. Die Teilanzeigebereiche weisen Anzeigebetätigungselemente auf, die zwischen dem Minimalwert und dem Maximalwert der jeweiligen entsprechenden Teil-Drehzahlbereiche mit der Zunahme und Abnahme der Drehzahl verändert werden, wobei die Teilanzeigebereiche auf einer Zähleranzeigefläche voneinander getrennt sind.

DE 10 2010 000 309 A1 lehrt ein Informationsanzeigesystem, das eine Informationsanzeige mit mindestens einem Messinstrument umfasst, das dazu ausgebildet ist, Informationen über einen Fahrzeugbetriebszustand anzuzeigen. Das Informationsanzeigesystem umfasst ferner einen Controller, der dazu ausgebildet ist, Informationen über den anzuzeigenden Fahrzeugbetriebszustand, sowie Informationen, die eine untere Grenze für eine Auflösungseinstellung und eine obere Grenze für die Auflösungseinstellung anzeigen, sowie Informationen, die eine Anpassung der Auflösungseinstellung des mindestens einen Messinstruments innerhalb der unteren Grenze für die Auflösungseinstellung und der oberen Grenze für die Auflösungseinstellung anzeigen zu empfangen. Der Controller ist ferner dazu ausgebildet, Informationen, die den Fahrzeugbetriebszustand und die Auflösungseinstellung anzeigen zu übertragen, so dass das mindestens eine Messinstrument den Fahrzeugbetriebszustand unter Verwendung der Auflösungseinstellung anzeigt.

Ausgehend von diesem Stand der Technik ist es Aufgabe der vorliegenden Erfindung, die vorstehend beschriebenen Nachteile zu beheben. Insbesondere soll eine Anzeigevorrichtung bereitgestellt werden, die dazu beiträgt, die Verkehrssicherheit, insbesondere auf Grund einer guten Wahrnehmbarkeit der angezeigten Informationen, zu erhöhen.

Die Aufgabe wird durch eine Anzeigevorrichtung gemäß dem Anspruch 1 sowie durch einen elektrisch angetriebenen Roller gemäß dem Anspruch 14 gelöst. Insbesondere wird die Aufgabe durch eine Anzeigevorrichtung für einen elektrisch angetriebenen Roller gelöst, wobei die Anzeigevorrichtung umfasst:
- eine erste Anzeigeeinrichtung, nämlich einen Flachbildschirm, mit einer ersten Auflösung;
- eine zweite elektrische oder elektronische Anzeigeeinrichtung mit einer zweiten Auflösung, wobei vorzugsweise die zweite Auflösung deutlich geringer ist als die erste Auflösung,
wobei die Anzeigevorrichtung dazu ausgebildet ist, eine Information, die auf einem Messwert, und/oder einer Stellgröße basiert (z.B. ein Ladezustand einer Batterie des Motorrollers), gleichzeitig auf der ersten Anzeigeeinrichtung und der zweiten Anzeigeeinrichtung anzuzeigen. Die erste Auflösung ist um mindestens 70 % höher als die zweite Auflösung und die erste Anzeigeeinrichtung ist ein LCD-Flachbildschirm, ein Plasma-Flachbildschirm oder ein OLED-Flachbildschirm mit einer Auflösung von mehr als 1.000 Bildpunkten.

Ein Gedanke der vorliegenden Erfindung besteht also darin, wichtige Informationen, beispielsweise Messwerte und/oder Stellgrößen auf zwei sich unterscheidenden Anzeigeeinrichtungen darzustellen. In einer Ausführungsform unterscheiden sich die Anzeigeeinrichtungen hinsichtlich der verwendeten Technologie. So kann beispielsweise die zweite elektrische Anzeigeeinrichtung einfache Lampen und/oder LEDs verwenden, um Informationen zu visualisieren. Die erste Anzeigeeinrichtung kann ein Flachbildschirm, beispielsweise basierend auf OLED-Technologie sein. Die unterschiedlichen Technologien haben unterschiedliche Vorteile, so dass nicht nur eine Redundanz geschaffen wird, sondern auch in sich unterscheidenden Situationen stets eine optimale Darstellung der Information gewährleistet ist. So kann der Flachbildschirm beispielsweise völlig anders auf starke Sonneneinstrahlung reagieren als die exemplarisch genannten Leuchtdioden bzw. LEDs. Die erste und die zweite Anzeigeeinrichtung können in Extremsituationen, z. B. Hitze, Kälte, Schläge, Wasser, unterschiedlich reagieren. Das redundante Anzeigen auf unterschiedlichen Anzeigeeinrichtungen ermöglicht es auch, in diesen Extremsituationen die Sicherheit des Benutzers des Motorrollers zu gewährleisten.

Die angezeigte Information kann jede beliebige Information sein. In einem Ausführungsbeispiel handelt es sich hierbei um einen Ladezustand einer Batterie des Motorrollers und/oder eine Geschwindigkeitsanzeige des Motorrollers. Die angezeigte Information kann auf der ersten Anzeigeeinrichtung völlig anders dargestellt werden, wie auf der zweiten Anzeigeeinrichtung. Beispielsweise ist es denkbar, die Informationen auf der ersten Anzeigeeinrichtung aufgrund der hohen Auflösung in Form von Zahlen, z. B. 10 %, 20 %, 30 %, 40 % darzustellen. Bei der zweiten Anzeigeeinrichtung kann die gleiche Information mittels Balken, z. B. Ladebalken dargestellt sein. So können beispielsweise sechs beleuchtete Balken eine vollständige Ladung der Batterie anzeigen. Soweit nur einige der sechs verfügbaren Balken beleuchtet sind, ist der Ladezustand entsprechend reduziert.

In einer Ausführungsform ist die erste Anzeigeeinrichtung physisch getrennt von der zweiten Anzeigeeinrichtung angeordnet. Vorzugsweise sind beide zumindest teilweise Anzeigeeinrichtungen in einer Abdeckung angeordnet. Gegebenenfalls kann die physische Trennung auch mit einer elektrischen Trennung der Anzeigeeinrichtungen einhergehen.

Wie bereits erläutert, kann die zweite Anzeigeeinrichtung eine Vielzahl von Leuchtdioden umfassen. In einer Ausführungsform ist die Anzahl der Leuchtdioden für die zweite Anzeigeeinrichtung kleiner als 50, insbesondere kleiner als 20.

Zumindest einige der Leuchtdioden können im Wesentlichen entlang einer Geraden oder einem Teilkreisbogen angeordnet sein. Mittels einer entsprechenden Anordnung ist es möglich, Füllzustände bzw. Ladezustände besonders gut zu visualisieren. Entsprechend können auch Geschwindigkeitsanzeigen ausgehend von einer Maximalgeschwindigkeit angezeigt werden. Erfindungsgemäß bedeutet im Wesentlichen entlang einer Geraden und/oder eines Teilkreisbogens, dass der Abstand zwischen der Leuchtdiode und der entsprechenden Geraden oder dem entsprechenden Teilkreisbogen kleiner oder gleich als 1 cm, insbesondere kleiner oder gleich als 0,5 cm ist.

In einer Ausführungsform umfasst die erste Anzeigeeinrichtung eine zumindest im Wesentlichen rechteckige Anzeigefläche. Die Bauelemente der zweiten Anzeigeeinrichtungen können in dieser Ausführungsform entlang, beispielsweise linksseitig oder rechtsseitig der rechteckigen Anzeigefläche angeordnet sein. In einer bevorzugten Ausführungsform ist eine Teilmenge der Leuchtdioden auf der linken oder der rechten Seite der rechteckigen Anzeigefläche angeordnet. Vorzugsweise sind jeweils mindestens fünf Leuchtdioden vorgesehen, um eine Geschwindigkeit oder einen Füllzustand anzuzeigen.

In einer Ausführungsform umfasst die Anzeigevorrichtung ein Abdeckungselement. Das Abdeckungselement kann beispielsweise Teil der bereits genannten Abdeckung und derart ausgerichtet sein, dass das Abdeckungselement auf der dem Benutzer zugewandten Seite angeordnet ist. Das Abdeckungselement ist vorzugsweise zumindest abschnittsweise transparent. An der Unterseite, also der dem Benutzer abgewandten Seite des Abdeckungselements, können sich die erste und die zweite Anzeigeeinrichtung befinden.

In einer Ausführungsform sind zumindest 80 % des Bereichs, der die erste Anzeigeeinrichtung überdeckt, transparent. Oberhalb von Bauelementen, beispielsweise Leuchtdioden, der zweiten Anzeigeeinrichtung, können Einfärbungen oder Beklebungen oder Gravuren vorhanden sein. Die Einfärbungen ermöglichen es, unterschiedliche Farben herzustellen. Mittels der Beklebung können Symbole, beispielsweise zur Visualisierung von Defekten dargestellt werden.

In einer Ausführungsform kann die Auflösung mehr als 10.000 Bildpunkte betragen. Eine entsprechend hochauflösende Anzeigeeinrichtung kann verwendet werden, um Informationen sehr differenziert anzuzeigen.

In einer Ausführungsform weist die Anzeigevorrichtung eine Abdeckung auf, wobei die Abdeckung über ein Anzeigegelenk verschwenkbar, insbesondere drehbeweglich, an einer Basis gelagert ist. Die Anzeigevorrichtung kann (in dieser Ausführungsform) einen Aktuator aufweisen, der in Wirkverbindung mit der Abdeckung und/oder dem Anzeigegelenk steht und dazu ausgebildet ist, die Abdeckung von einer ersten Stellung in eine zweite Stellung zu verschwenken. Die Anzeigevorrichtung kann darüber hinaus eine Steuereinrichtung zum Ansteuern des Aktuators aufweisen.

Der Aktuator kann als Elektromotor, insbesondere als ein bürstenloser Gleichstrommotor, ausgebildet sein. Der Aktuator kann derart angeordnet sein, dass eine Drehwelle in axialer Richtung derart in das Anzeigegelenk eingreift, dass eine Drehung der Welle ein Verschwenken der Abdeckung bewirkt.

Die Steuereinrichtung kann dazu ausgebildet sein, in Reaktion auf mindestens eine Eingabe, den Aktuator derart anzusteuern, dass die Abdeckung von der ersten Stellung, z.B. einer geschlossenen Stellung, in die zweite Stellung, z.B. einer geöffneten Stellung, verschwenkt wird.

In einer Ausführungsform ermöglicht die Anzeigevorrichtung also das Verschwenken der Abdeckung zwischen verschiedenen Stellungen. Es ist somit auf einfache Weise möglich, die erste und/oder zweite Anzeigeeinrichtung zu verstellen. Zum Schutz der ersten und/oder zweiten Anzeigeeinrichtung kann die Abdeckung zum Beispiel beim Verlassen des Fahrzeugs in eine geschlossene Stellung verschwenkt werden, sodass diese empfindlichen Komponenten geschützt sind.

Die eingangs genannte Aufgabe wird weiterhin durch einen elektrisch angetriebenen Roller mit einer Anzeigevorrichtung gelöst, die einige oder alle Merkmale der vorab beschriebenen Anzeigevorrichtung umfasst.

Im Folgenden wird die Erfindung anhand von Figuren näher erläutert. Dabei zeigen:
- Fig. 1: einen elektrisch angetriebenen Motorroller in einer Seitenansicht;
- Fig. 2: eine Lenkerbaugruppe in einer Rückansicht;
- Fig. 3: eine Anzeigevorrichtung mit einer ersten und einer zweiten Anzeigevorrichtung
- Fig. 4: eine Anzeigevorrichtung in geöffneter Stellung;
- Fig. 5: die Anzeigevorrichtung der Fig. 3 in geschlossener Stellung;

Im Folgenden werden für gleiche oder gleichwirkende Teile dieselben Bezugsziffern verwendet.

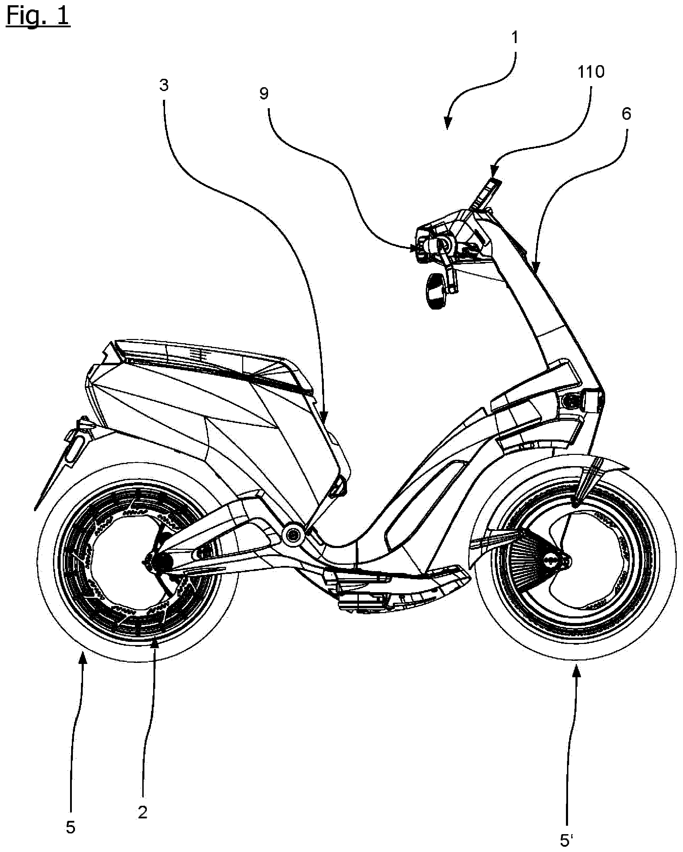

Die Fig. 1 zeigt einen elektrisch angetriebenen Motorroller 1 mit Vorder- und Hinterrad 5, 5'. An dem Hinterrad 5 ist ein Elektromotor 2 als Außenläufermotor in die Felge des Hinterrades 5 integriert. Der Elektromotor 2 wird über eine Batterie 3 gespeist, die als Teil des Fahrersitzes ausgebildet ist. Hierzu ist die Batterie 3 mit dem Motor 2 elektrisch verbunden. Der Motorroller 1 verfügt ferner über eine Lenkerbaugruppe 6, die u.a. eine Anzeigevorrichtung 110 und einen Gasdrehgriff 9 umfasst.

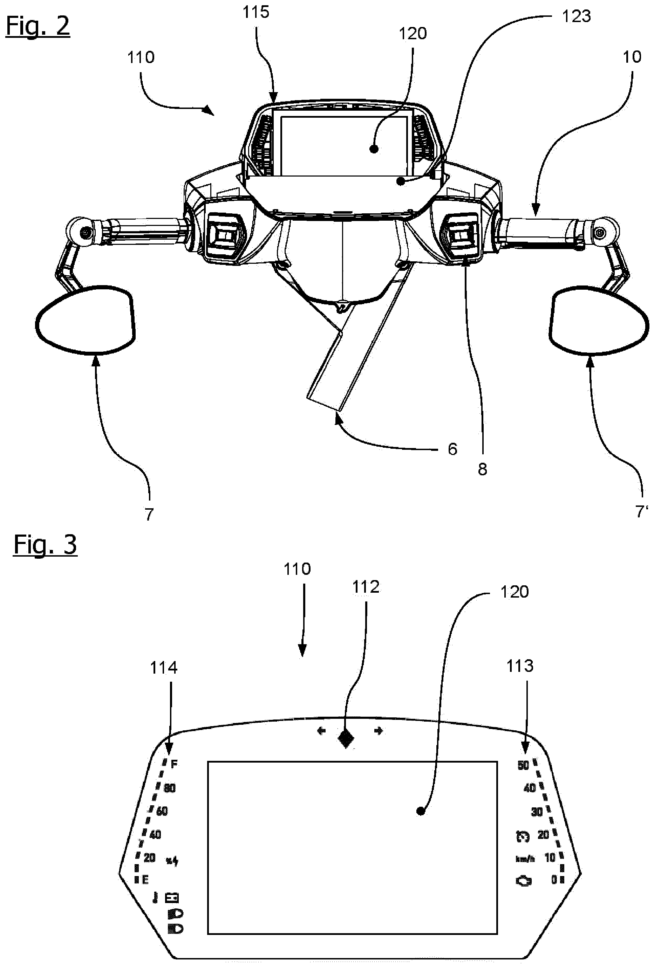

Die Fig. 2 zeigt die Lenkerbaugruppe 6 in einer Rückansicht. Die Lenkerbaugruppe 6 umfasst einen linken Rückspiegel 7 sowie einen rechten Rückspiegel 7'. Die Lenkerbaugruppe 6 beherbergt die Anzeigevorrichtung 110, mittels derer die Betriebsdaten bzw. Informationen des Motorrollers 1 angezeigt werden. Die Anzeigevorrichtung 110 umfasst eine erste Anzeigeeinrichtung in Form eines Flachbildschirms 120 sowie eine zweite Anzeigeeinrichtung, die sich in mehrere Teilsegmente untergliedern lässt. Gemäß dem in Fig. 3 gezeigten Ausführungsbeispiel handelt es sich bei diesen Teilsegmenten, um ein erstes Teilsegment zur Darstellung der Geschwindigkeit (vgl. LED-Geschwindigkeitsanzeige 113) sowie um ein zweites Teilsegment zur Darstellung des Ladezustands des Motorrollers (vgl. LED-Ladeanzeige 114). Weitere Teilsegmente beschäftigen sich mit den gesetzten Blinkern bzw. Fahrtrichtungsanzeigern (vgl. Pfeile oben), den Scheinwerfern (vgl. Symbole auf der unteren rechten Seite) und weiteren Betriebszuständen (vgl. die weiteren Symbole, z.B. das Batteriesymbol).

Auch auf dem Flachbildschirm 120 wird erfindungsgemäß die aktuell gefahrene Geschwindigkeit sowie die verbleibende Reichweite des Motorrollers 1 bzw. der Ladezustand angezeigt. Zur Erhöhung der Sicherheit sind neben dem Flachbildschirm 120, unter einem teilweise transparenten Abdeckungselement Leuchtdioden vorgesehen, die in redundanter Weise die Geschwindigkeit des Motorrollers 1 anzeigen. Diese Leuchtdioden bilden die zusammen mit den Symbolen auf dem Abdeckungselement und unter Nutzung von nichttransparenten Abschnitten die zweite Anzeigeeinrichtung, wie diese exemplarisch in Fig. 3 dargestellt ist.

Die Leuchtdioden können unterschiedlich eingefärbtes Licht emittieren, das beispielsweise den momentanen Fahrmodus angibt.

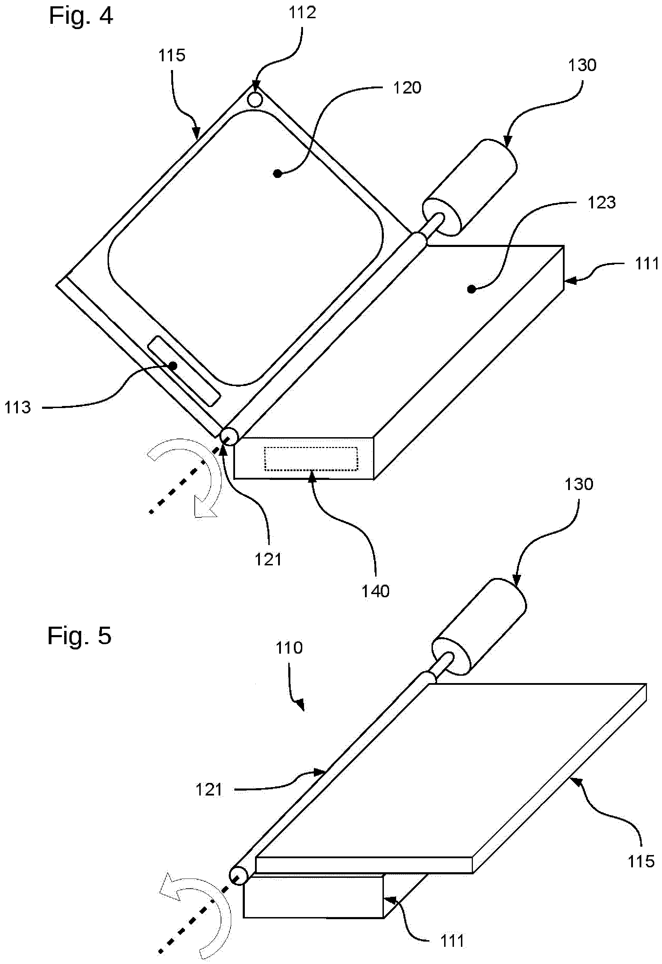

Ferner ist eine Steuereinrichtung 127 (vgl. Fig. 4) in der Lenkerbaugruppe 6 vorgesehen, die Positionsdaten von dem Gasdrehgriff 9 empfängt und verarbeitet. Unter Verwendung der Positionsdaten bestimmt die Steuereinheit 127 einen Betriebsmodus für den Elektromotor 2. Hierzu ist die Steuereinrichtung mit der Batterie 3 und dem Elektromotor 2 verbunden. Der Betriebsmodus kann erfindungsgemäß auf der ersten und/oder zweiten Anzeigeeinrichtung dargestellt werden.

In einem Ausführungsbeispiel umfasst die Anzeigevorrichtung 110 weiterhin einen Lichtsensor 112. Dieses kann mit der ersten und/oder zweiten Anzeigeeinrichtung interagieren. Beispielsweise kann eine automatische Dimmung in der Nacht erfolgen.

Fig. 4 und 5 zeigen eine schematische Darstellung eines weiteren Ausführungsbeispiels der Anzeigevorrichtung 110. Die Anzeigevorrichtung 110 ist hier elektrisch betätigbar. Die Anzeigevorrichtung 110 ist in der Fig. 4 in einer geöffneten Stellung P2 dargestellt. Die Anzeigevorrichtung 110 umfasst eine Basis 111 sowie eine Abdeckung 125, in die der Flachbildschirm 120 eingelassen ist. Der Flachbildschirm 120 ist über ein Anzeigegelenk 121 mit der Basis 111 verschwenkbar verbunden.

An dem Anzeigegelenk 121 ist ein Elektromotor 130 angeordnet, dessen Antriebswelle mit dem Anzeigegelenk 121 in Wirkverbindung steht. Das Verschwenken des Flachbildschirms 120 wird also über den Elektromotor 30 ausgeführt.

An der Anzeigevorrichtung 110 ist an dem Flachbildschirm 120 ein Lichtsensor 112 angeordnet. Der Lichtsensor 112 ist in der vorliegenden Ausführungsform als Kamera ausgebildet, so dass der Bereich vor dem Flachbildschirm 120 erfasst wird. Vorzugsweise ist der Lichtsensor 112 als Weitwinkelkamera 112 ausgebildet, so dass ein möglichst großer Bereich erfasst wird.

An der Basis 111 ist ferner eine Eingabeeinrichtung 123, wie z.B. eine Tastatur, vorgesehen. Die Eingabeeinrichtung 123 kann von einem Fahrer dazu verwendet werden, Benutzereingaben vorzunehmen. Beispielsweise kann eine Benutzerauthentifikation mittels der Eingabeeinrichtung 123 ausgeführt werden.

Fig. 5 zeigt die Anzeigevorrichtung 110 in einer geschlossenen Stellung P1. Der Flachbildschirm 120 - die erste Anzeigeeinrichtung - ist hierzu von der geöffneten Stellung P2 um das Anzeigegelenk 121 mittels des Elektromotors 130 verschwenkt worden. In der geschlossenen Stellung P1 ist der Flachbildschirm 120 vor äußeren Umwelteinflüssen und Vandalismus geschützt. Hierzu kann an der Rückseite der Abdeckung 125 eine feste Oberfläche, z.B. aus Aluminium oder einem Kunststoff vorgesehen sein. Auf der Vorderseite der Abdeckung 125 kann sich eine Glasscheibe als Abdeckungselement. Auch bei dem Ausführungsbeispiel gemäß Fig. 4 und 5 ist eine zweite Anzeigeeinrichtung in Form einer LED-Geschwindigkeitsanzeige 113 vorgesehen. Die LED-Geschwindigkeitsanzeige 113 kann als LED-Array ausgebildet sein. Das Abdeckungselement schützt die erste und die zweite Anzeigeeinrichtung.

Abschließend wird darauf hingewiesen, dass die einzelnen Komponenten oder Ausführungsbeispiele jeweils einzeln und in jeder beliebigen Kombination als erfindungswesentlich beansprucht werden. Abwandlungen hiervon sind dem Fachmann geläufig und sind von der Patentanmeldung umfasst.

### Bezuaszeichenliste

- 1: Motorroller
- 2: Motor
- 3: Batterie
- 5, 5': Vorder- Hinterrad
- 6: Lenkerbaugruppe
- 7, 7': Linker und rechter Rückspiegel
- 8: Blinkerhebel
- 9: Gasdrehgriff
- 10: Griffteil
- 12: Drehteil
- 110: Anzeigevorrichtung
- 111: Basis
- 112: Lichtsensor
- 113: LED-Geschwindigkeitsanzeige
- 114: LED-Ladeanzeige
- 115: Abdeckung
- 120: Flachbildschirm
- 121: Anzeigegelenk
- 122: Spiegelebene
- 123: Eingabeeinrichtung
- 130: Elektromotor
- 140: Steuereinrichtung

## Patentansprüche

1. Anzeigevorrichtung (110) für einen elektrisch angetriebenen Motorroller (1), Folgendes aufweisend:
- eine erste Anzeigeeinrichtung, nämlich einen Flachbildschirm (120), mit einer ersten Auflösung;
- eine zweite elektrische oder elektronische Anzeigeeinrichtung mit einer zweiten Auflösung, wobei vorzugsweise die zweite Auflösung deutlich geringer ist als die erste Auflösung,
wobei
die Anzeigevorrichtung (110) dazu ausgebildet ist, eine Information, die auf einem Messwert (1) und/oder einer Stellgröße basiert, gleichzeitig auf der ersten Anzeigeeinrichtung und der zweiten Anzeigeeinrichtung anzuzeigen,
**dadurch gekennzeichnet, dass**
die erste Auflösung um mindestens 70% höher als die zweite Auflösung ist und wobei die erste Anzeigeeinrichtung ein LCD-Flachbildschirm, ein Plasma-Flachbildschirm oder ein OLED-Flachbildschirm mit einer Auflösung von mehr als 1000 Bildpunkten umfasst.

2. Anzeigevorrichtung (110) nach Anspruch 1,
**dadurch gekennzeichnet, dass**
die erste Anzeigeeinrichtung physisch getrennt von der zweiten Anzeigeeinrichtung, vorzugsweise in einer Abdeckung (125), angeordnet ist.

3. Anzeigevorrichtung (110) nach einem der vorhergehenden Ansprüche,
**dadurch gekennzeichnet, dass**
die zweite Anzeigeeinrichtung eine Vielzahl von Leuchtdioden umfasst, wobei die Anzahl der Leuchtdioden kleiner als 50, insbesondere kleiner als 20 ist.

4. Anzeigevorrichtung (110) nach einem der vorhergehenden Ansprüche, insbesondere nach Anspruch 3,
**dadurch gekennzeichnet, dass**
zumindest einige der Leuchtdioden im Wesentlichen entlang einer Geraden oder einem Teilkreisbogen angeordnet sind.

5. Anzeigevorrichtung (110) nach einem der vorhergehenden Ansprüche,
**dadurch gekennzeichnet, dass**
die erste Anzeigeeinrichtung eine zumindest im Wesentlichen rechteckige Anzeigefläche umfasst, wobei zumindest einige der Bauelemente, insbesondere der Leuchtdioden, der zweiten Anzeigeeinrichtung entlang der Seitenränder der Anzeigefläche angeordnet sind.

6. Anzeigevorrichtung (110) nach einem der vorhergehenden Ansprüche,
**gekennzeichnet durch**:
ein zumindest abschnittsweise transparentes Abdeckungselement mit einer Oberseite und einer Unterseite, wobei die erste und zweite Anzeigeeinrichtung jeweils an der Unterseite der Abdeckung angeordnet sind.

7. Anzeigevorrichtung (110) nach einem der vorhergehenden Ansprüche, insbesondere nach Anspruch 6,
**dadurch gekennzeichnet, dass**
zumindest einige Abschnitte des transparenten Abdeckungselements oberhalb von Bauelementen, insbesondere Leuchtdioden, der zweiten Anzeigeeinrichtung beklebt und/oder eingefärbt sind.

8. Anzeigevorrichtung (110) nach einem der vorhergehenden Ansprüche,
**dadurch gekennzeichnet, dass**
die erste Anzeigeeinrichtung mehr als 10000 Bildpunkte umfasst.

9. Anzeigevorrichtung (110) nach einem der vorhergehenden Ansprüche,
**gekennzeichnet durch**:
- eine/die Abdeckung (125) zur Aufnahme der ersten und/oder zweiten Anzeigeeinrichtung, und
- eine Basis (111), wobei die Abdeckung über ein Anzeigegelenk (121) an der Basis derart angebracht ist, dass die Abdeckung von einer ersten Stellung (P1) in eine zweite Stellung (P2) verschwenkbar ist.

10. Elektrisch angetriebener Roller mit einer Anzeigevorrichtung (110) nach einem der vorhergehenden Ansprüche.

## Claims

1. A display device (110) for an electrically driven motor scooter (1), featuring the following:
- a first display device, i.e., a flat screen (120), having a first resolution;
- a second electric or electronic display device having a second resolution, wherein the second resolution preferably is significantly lower than the first resolution,
wherein
the display device (110) is configured to display information based on a measured value (1) and/or a variable at the same time on the first display device and the second display device,
**characterized in that**
the first resolution is by at least 70 % higher than the second resolution, and wherein the first display device comprises an LCD flat screen, a plasma flat screen or an OLED flat screen having a resolution of more than 1000 pixels.

2. The display device (110) according to claim 1,
**characterized in that**
the first display device is arranged to be physically separated from the second display device, preferably in a cover (125).

3. The display device (110) according to any one of the preceding claims,
**characterized in that**
the second display device comprises a plurality of light-emitting diodes, wherein the number of light-emitting diodes is smaller than 50, in particular smaller than 20.

4. The display device (110) according to any one of the preceding claims, in particular according to claim 3,
**characterized in that**
at least some of the light-emitting diodes essentially are arranged along a straight line or a partial circular arc.

5. The display device (110) according to any one of the preceding claims,
**characterized in that**
the first display device comprises an at least essentially rectangular display surface, wherein at least some of the constructional elements, in particular of the light-emitting diodes, are arranged along of the margins of the display surface.

6. The display device (110) according to any one of the preceding claims,
**characterized by**:
a cover element transparent at least in sections having an upper side and a lower side, wherein the first and the second display device each are arranged at the lower side of the cover.

7. The display device (110) according to any one of the preceding claims, in particular according to claim 6,
**characterized in that**
at least some sections of the transparent cover element above constructional elements, in particular light-emitting diodes, of the second display device are laminated and/or coloured.

8. The display device (110) according to any one of the preceding claims,
**characterized in that**
the first display device comprises more than 10000 pixels.

9. The display device (110) according to any one of the preceding claims,
**characterized by**:
- a/the cover (125) for receiving the first and/or second display device, and
- a base (111), wherein the cover is mounted to the base via a display articulation such that the cover is pivotable from a first position (P1) to a second position (P2).

10. An electrically driven scooter having a display device (110) according to any one of the preceding claims.

## Revendications

1. Dispositif d'affichage (110) pour un scooter motorisé (1) à entraînement électrique, présentant ce qui suit :
- un premier organe d'affichage, à savoir un écran plat (120), ayant une première résolution ;
- un deuxième organe d'affichage électrique ou électronique ayant une deuxième résolution, sachant que de préférence la deuxième résolution est nettement moindre que la première résolution,
sachant que
le dispositif d'affichage (110) est constitué pour afficher simultanément sur le premier organe d'affichage et le deuxième organe d'affichage une information qui est basée sur une valeur de mesure (1) et/ou une grandeur de réglage,
**caractérisé en ce que**
la première résolution est d'au moins 70 % supérieure à la deuxième résolution et sachant que le premier organe d'affichage est un écran plat LCD, un écran plat plasma ou un écran plat OLED ayant une résolution de plus de 1000 pixels.

2. Dispositif d'affichage (110) selon la revendication 1,
**caractérisé en ce que**
le premier organe d'affichage est disposé de manière séparée physiquement du deuxième organe d'affichage, de préférence dans un recouvrement (125).

3. Dispositif d'affichage (110) selon l'une des revendications précédentes,
**caractérisé en ce que**
le deuxième organe d'affichage comprend une pluralité de diodes électroluminescentes, sachant que le nombre de diodes électroluminescentes est inférieur à 50, en particulier inférieur à 20.

4. Dispositif d'affichage (110) selon l'une des revendications précédentes, en particulier selon la revendication 3,
**caractérisé en ce que**
du moins certaines des diodes électroluminescentes sont disposées sensiblement le long d'une droite ou d'un arc de cercle partiel.

5. Dispositif d'affichage (110) selon l'une des revendications précédentes,
**caractérisé en ce que**
le premier organe d'affichage comprend une surface d'affichage du moins sensiblement rectangulaire, sachant que du moins certains des composants, en particulier des diodes électroluminescentes, du deuxième organe d'affichage sont disposés le long des bords latéraux de la surface d'affichage.

6. Dispositif d'affichage (110) selon l'une des revendications précédentes,
**caractérisé par** :
un élément de recouvrement transparent du moins par sections présentant un côté supérieur et un côté inférieur, sachant que le premier et le deuxième organe d'affichage sont disposés respectivement sur le côté inférieur du recouvrement.

7. Dispositif d'affichage (110) selon l'une des revendications précédentes, en particulier selon la revendication 6,
**caractérisé en ce que**
du moins certaines sections de l'élément de recouvrement transparent au-dessus de composants, en particulier de diodes électroluminescentes, du deuxième organe d'affichage sont étiquetées et/ou colorées.

8. Dispositif d'affichage (110) selon l'une des revendications précédentes,
**caractérisé en ce que**
le premier organe d'affichage comprend plus de 10 000 pixels.

9. Dispositif d'affichage (110) selon l'une des revendications précédentes,
**caractérisé par** :
- un/le recouvrement (125) destiné à recevoir le premier et/ou deuxième organe d'affichage, et
- une base (111), sachant que le recouvrement est monté au niveau de la base via une articulation d'affichage (121) de telle manière que le recouvrement soit pivotable d'une première position (P1) à une deuxième position (P2).

10. Scooter à entraînement électrique présentant un dispositif d'affichage (110) selon l'une des revendications précédentes.
